(19) **Europäisches Patentamt / European Patent Office / Office européen des brevets**

(11) **EP 2 889 595 B1**

(12) **FASCICULE DE BREVET EUROPEEN**

(45) Date de publication et mention
de la délivrance du brevet:
**19.10.2016 Bulletin 2016/42**

(51) Int Cl.:
***G01K 7/16*** (2006.01)

(21) Numéro de dépôt: **14199367.5**

(22) Date de dépôt: **19.12.2014**

(54) **Procédé de gestion d'une alimentation en courant ou en tension d'un capteur de température résistif disposé dans une enceinte cryogénique**

Verfahren zur Steuerung der Strom- oder Spannungsversorgung eines resistiven Temperatursensors, der in einem Tieftemperaturgehäuse eingebaut ist

Method for managing a supply of current or voltage of a resistive temperature sensor arranged inside a cryogenic enclosure

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2013 FR 1363589**

(43) Date de publication de la demande:
**01.07.2015 Bulletin 2015/27**

(73) Titulaire: **COMMISSARIAT A L'ENERGIE ATOMIQUE ET AUX ENERGIES ALTERNATIVES**
**75015 Paris (FR)**

(72) Inventeurs:
- **Attard, Anthony**
  **20200 San Martino Di Lota (FR)**
- **Communal, Daniel**
  **73110 La Rochette (FR)**

(74) Mandataire: **Novaimo**
**Bâtiment Europa 2**
**310 avenue Marie Curie**
**Archamps Technopole**
**74166 Saint-Julien-en-Genevois Cedex (FR)**

(56) Documents cités:
**EP-A1- 0 168 518     CA-A1- 1 163 461**

EP 2 889 595 B1

## Description

### Domaine technique de l'invention

L'invention concerne le domaine de la cryogénie, et plus particulièrement la détection d'une température au sein d'une enceinte cryogénique.

L'invention a pour objet plus particulièrement un procédé de gestion d'une alimentation d'un capteur de température résistif placé dans une enceinte cryogénique.

### État de la technique

Dans le cadre de la cryogénie, il est usuel d'avoir à mesurer des températures au sein d'une enceinte cryogénique. Généralement, il s'agit de mesures de résistivité électrique d'un capteur de température, de préférence de valeur faible et sur une large gamme (plage de résistance mesurée aux bornes du capteur de température).

Les capteurs industriels couramment utilisés pour mesurer ces températures cryogéniques sont résistifs. Souvent les valeurs de la résistance électrique de ces capteurs sont d'autant plus grandes que la température dans l'enceinte est faible. En fait, mesurer une température, c'est être capable de mesurer une résistance qui peut varier de quelques Ohms à quelques centaines de KOhms.

La mesure de la température va nécessairement provoquer un échauffement du capteur de température résistif par effet Joule. Cependant, le capteur de température résistif ne doit pas perturber de manière significative la grandeur à mesurer, or l'importance de ces perturbations est très grande à basse température du fait qu'elles sont difficiles à évacuer.

Dans le domaine de la cryogénie, l'instrumentation est généralement spécifique, l'objectif étant de transmettre une puissance d'excitation minimale afin que l'échauffement ne perturbe ni le milieu, ni la mesure. Cela revient à mesurer des signaux de faible niveau (quelques millivolts) sur une plage de résistance très grande.

Classiquement, lorsque la gamme de mesure (plage sur laquelle varie la résistance du capteur de température résistif) est étendue, les procédés actuels mettent en oeuvre des commutations de gamme. Une commutation de gamme consiste à modifier la résistance électrique du circuit où est disposé le capteur de mesure résistif, par exemple en ajoutant des résistances de shunt.

A chaque changement de gamme, la puissance dissipée fait un saut puisque cela consiste à changer la valeur de la résistance du circuit et par là, la valeur du courant qui circule dans le capteur de température résistif. Il en résulte une modification de l'échauffement du capteur de température, notamment lorsque la température oscille autour du point de changement de gamme.

Le document EP 0 168 518 A1 décrit un exemple de capteur de température résistif placé dans une enceinte cryogénique.

### Objet de l'invention

Le but de la présente invention est de proposer une solution qui remédie aux inconvénients listés ci-dessus.

On tend vers ce but grâce à un procédé de gestion d'une alimentation d'un capteur de température résistif placé dans une enceinte cryogénique et alimenté sélectivement en courant dans un premier mode ou en tension dans un deuxième mode, ledit procédé comprenant une étape de détermination d'au moins une grandeur physique associée au fonctionnement du capteur de température résistif, et une étape de commutation du premier mode au deuxième mode, ou inversement, en fonction de ladite au moins une grandeur physique déterminée.

Selon une réalisation, le procédé comporte une étape de détection d'une saturation d'au moins une mesure, notamment de tension ou de courant, réalisée sur un circuit comprenant le capteur de température résistif et destinée à déterminer ladite grandeur physique, l'alimentation du capteur de température résistif étant commutée du premier mode au deuxième, ou inversement, si ladite au moins une mesure est saturée, notamment pour un nombre donné d'échantillons de mesure.

Avantageusement, dans le premier mode, le capteur de température résistif est alimenté en courant à une valeur $I_{excitation}$, et l'étape de détermination de ladite au moins une grandeur physique comprend une détermination d'une tension $V_{mes}$ aux bornes dudit capteur de température résistif, et en ce que ladite étape de commutation est mise en oeuvre si $I_{excitation}*V_{mes}$ devient supérieure ou égale à une puissance maximum de référence $P_{dmax}$.

Avantageusement, dans le deuxième mode, le capteur de température résistif est alimenté en tension à une valeur $V_{excitation}$, l'étape de détermination de ladite au moins une grandeur physique comprenant la détermination d'un courant $I_{mes}$ traversant ledit capteur de température résistif, et en ce que ladite étape de commutation est mise en oeuvre si $V_{excitation}*I_{mes}$ devient supérieure ou égale à une puissance maximum de référence $P_{dmax}$.

Selon une réalisation particulière, le procédé comporte une étape de comparaison de la grandeur physique déterminée à un seuil prédéfini de grandeur physique, et en fonction du résultat de l'étape de comparaison, l'étape de commutation du premier mode au deuxième mode, ou inversement, est mise en oeuvre concomitamment avec une étape de modification d'un élément résistif relié électriquement au capteur de température résistif pour ajuster la puissance dissipée par ledit capteur de température résistif lors de son alimentation.

Dans un mode de réalisation, le procédé comprend une étape d'injection de signaux d'excitation modulés dans le capteur de température résistif, et une étape d'échantillonnage de données issues d'un circuit incluant le capteur de température résistif et utilisant un démodulateur permettant de déterminer une grandeur physique correspondante pour chaque échantillon en sortie du démodulateur.

Par exemple, dans le premier mode chaque grandeur physique déterminée est une tension déduite, ou mesurée, aux bornes du capteur de température résistif, et, si pour T1 échantillons arrivés au démodulateur, la tension déduite, ou mesurée, au carré est en dessous d'une valeur seuil associée, alors l'étape de commutation du premier mode au deuxième mode est mise en oeuvre concomitamment avec une étape de modification d'un élément résistif relié électriquement au capteur de température résistif.

Selon un autre exemple, dans le deuxième mode chaque grandeur physique déterminée est le courant déduit, ou mesuré, traversant le capteur de température résistif, et si pour T1 échantillons arrivés au démodulateur, le courant déduit, ou mesuré, au carré est inférieur à une valeur seuil associée alors l'étape de commutation du deuxième mode au premier mode est mise en oeuvre concomitamment avec une étape de modification d'un élément résistif relié électriquement au capteur de température résistif.

Le procédé peut comporter, pour chaque échantillon, une étape de conversion par un convertisseur d'un échantillon analogique issu du circuit vers un échantillon numérique à présenter à une entrée du démodulateur, le nombre T1 d'échantillons est au moins supérieur à un nombre représentant un retard en transmission des échantillons dû au convertisseur.

Préférentiellement, après une mise en oeuvre de l'étape de commutation, toute nouvelle mise en oeuvre de l'étape de commutation est inhibée en fonction d'un critère prédéterminé.

Par exemple, ladite nouvelle mise en oeuvre de l'étape de commutation est inhibée pour T2 échantillons, T2 étant supérieur à un nombre représentant le retard en transmission d'une chaîne de mesure comprenant le convertisseur et tout élément générant un retard.

L'invention est aussi relative à un procédé de détermination d'une température dans une enceinte cryogénique à partir d'un capteur de température résistif disposé dans ladite enceinte cryogénique, ledit procédé comprend une étape de mise en oeuvre du procédé de gestion de l'alimentation du capteur de température résistif tel que décrit, et une étape de détermination de la température mettant en oeuvre une étape de détermination de la résistance électrique du capteur de température résistif et une corrélation de la résistance électrique déterminée avec une valeur de température, notamment à partir d'une table de référence pré-établie.

De préférence, après la mise en oeuvre d'une étape de commutation, des informations d'interprétation des données lues à partir d'un circuit comprenant ledit capteur de température résistif sont conservées au moins temporairement du fait d'un décalage entre l'instant de lecture desdites données au niveau du circuit et leur interprétation par un démodulateur, ou en ce que l'étape de détermination de la température est inhibée tant que les données reçues par le démodulateur sont représentatives d'une lecture d'une donnée ayant eu lieu avant la commutation.

L'invention est aussi relative à un dispositif comprenant un capteur de température résistif placé dans une enceinte cryogénique ; une alimentation configurée pour alimenter ledit capteur de température résistif sélectivement en courant dans un premier mode ou en tension dans un deuxième mode ; un système de gestion de l'alimentation du dispositif comprenant un élément de détermination d'au moins une grandeur physique associée au fonctionnement du capteur de température résistif et un élément de commutation du premier au deuxième mode, ou inversement, en fonction de ladite au moins une grandeur physique déterminée.

Préférentiellement, le dispositif comporte une résistance de shunt reliée en série avec le capteur de température, un premier élément de mesure permettant de mesurer la tension aux bornes de la résistance de shunt, un deuxième élément de mesure permettant de mesurer la tension aux bornes du capteur de température résistif, un correcteur configuré de sorte à imposer une tension de consigne aux bornes du capteur de température résistif dans le deuxième mode, ou aux bornes de la résistance de shunt dans le premier mode.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 est un schéma représentatif des étapes d'un procédé de gestion d'une alimentation selon un mode d'exécution particulier de l'invention,
- la figure 2 est un graphique donnant l'évolution de la résistance en ohms d'un capteur de température résistif en fonction de sa puissance,
- la figure 3 représente la puissance dissipée par le capteur de température résistif en fonction de la valeur de la résistance électrique du capteur de température résistif au cours de la mise en oeuvre du procédé de gestion,
- la figure 4 illustre des étapes d'un mode d'exécution d'un procédé de détermination d'une température à partir du capteur de température résistif,
- la figure 5 illustre schématiquement un dispositif apte à être utilisé par le procédé de gestion,
- la figure 6 illustre plus en détails un circuit permettant de mettre en oeuvre la commutation,
- la figure 7 illustre de manière détaillée un système permettant la mise en oeuvre du procédé de gestion et/ou de détermination de la température.

**Description de modes préférentiels de l'invention**

Un milieu cryogénique peut être perturbé lorsque la puissance dissipée par le capteur de mesure résistif dépasse un seuil de puissance Pmax. Classiquement, un changement de gamme tel qu'évoqué précédemment est réalisé lorsque cette puissance est atteinte pour volontairement modifier la résistance du circuit comprenant le capteur de mesure et abaisser la puissance dissipée par ledit capteur de température.

La solution décrite ci-après diffère de l'art antérieur en ce qu'elle propose de résoudre la problématique de la puissance dissipée sans avoir à chaque fois à changer de gamme.

La solution développée ici se base sur le fait qu'il existe deux possibilités pour déterminer la valeur d'une résistance. Soit on impose un courant (on parle dans ce cas d'alimentation en source de courant) traversant la résistance et on mesure une tension $v$ en vue de ladite détermination, soit on impose une tension (on parle alors d'alimentation en source de tension) aux bornes de la résistance et on mesure le courant $I$ la parcourant/traversant en vue de ladite détermination.

Un capteur de température résistif se comportant comme une résistance dont les propriétés changent avec la température, la résistance visée ci-dessus est considérée comme un capteur de température résistif.

En effet, la puissance dissipée $P_d$ dans une résistance $R$ parcourue par un courant $I_R$ est donnée par la relation suivante :

$$P_d = R \times I_R{}^2 \ (1)$$

Par ailleurs, la puissance dissipée $P_d$ dans une résistance $R$ soumise à une tension $U_R$ à ses bornes est donnée par la relation suivante :

$$P_d = \frac{U_R{}^2}{R} \ (2)$$

Il est clair de l'analyse de la relation (1) que plus la résistance du capteur de température résistif augmente, plus la puissance dissipée correspondante augmente.

En outre, selon la relation (2), plus la résistance du capteur de température résistif augmente plus la puissance dissipée diminue. D'autre part, plus la résistance augmente et plus la sensibilité $\frac{dR}{dT}$ du capteur augmente. Même si l'on perd en sensibilité au niveau de la détermination de la résistance du capteur de température résistif, le fait de gagner en sensibilité au niveau de la conversion en température permet de conserver de bonnes performances même pour des hautes valeurs de résistance du capteur de température résistif.

Ainsi, contrairement à l'art antérieur qui suggère un changement de gamme, la présente invention consiste à mettre en oeuvre au moment opportun un changement d'alimentation du capteur de température résistif. Préférentiellement, ce moment opportun correspond à un moment où la puissance dissipée dépasse un certain seuil.

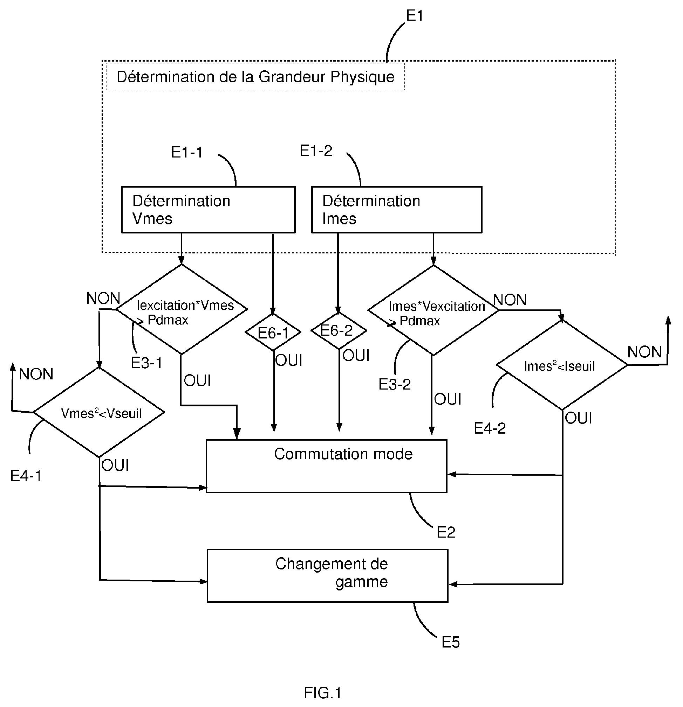

Plus généralement, la figure 1 illustre un procédé de gestion d'une alimentation d'un capteur de température résistif placé dans une enceinte cryogénique. Ce capteur de température résistif est alimenté sélectivement en courant dans un premier mode ou en tension dans un deuxième mode. Ce procédé comprend une étape de détermination E1 d'au moins une grandeur physique associée au fonctionnement du capteur de température résistif, et une étape de commutation E2 du premier mode au deuxième mode, ou inversement, en fonction de ladite au moins une grandeur physique déterminée.

De préférence, le capteur de température résistif est du type dont la résistance électrique augmente plus sa température diminue.

Bien entendu, on aura compris de ce qui a été dit ci-dessus que la grandeur physique déterminée peut conduire à calculer une puissance représentative de la puissance dissipée par le capteur de température résistif. Dans ce cas, la commutation peut être décidée si l'on dépasse ou atteint une puissance maximale de dissipation notée $P_{dmax}$. Plus précisément, $P_{dmax}$ est la puissance dissipée maximale autorisée au-dessus de laquelle on considère que le milieu cryogénique est perturbé. Cette puissance $P_{dmax}$ est généralement donnée par le fabricant du capteur, et est fonction d'une température effective dans l'enceinte cryogénique. Pour certains types de capteur de température résistif, les fabricants préconisent $P_{dmax} < 25nW$ à 4K. Cette contrainte sur la puissance dissipée est valable pour des températures basses donc pour des valeurs de résistance plutôt grande, c'est-à-dire au moins 1k$\Omega$ compte tenu des capteurs testés que l'on trouve dans l'industrie.

Ainsi, dans le premier mode, le capteur de température résistif est alimenté en courant à une valeur $I_{excitation}$, et l'étape de détermination de ladite au moins une grandeur physique comprend une détermination E1-1 d'une tension $V_{mes}$ aux bornes dudit capteur de température résistif. Dans ce cas, ladite étape de commutation E2 est mise en oeuvre si $I_{excitation}*V_{mes}$ devient supérieure ou égale à une puissance maximum de référence $P_{dmax}$ (sortie oui de E3-1 à la figure 1).

Alternativement, dans le deuxième mode, le capteur de température résistif est alimenté en tension à une valeur $V_{excitation}$, l'étape de détermination E1 de ladite au moins une grandeur physique comprenant la détermination E1-2 d'un courant $I_{mes}$ traversant ledit capteur de température résistif. Dans ce cas, ladite étape de commutation E2 est mise en oeuvre si $V_{excitation}*I_{mes}$ devient supérieure ou égale à une puissance maximum de référence P$_{dmax}$ (sortie oui de E3-2 à la figure 1). De préférence, l'étape de détermination E1 de ladite au moins une grandeur physique peut être réalisée à intervalles réguliers de sorte à vérifier si une commutation d'alimentation est nécessaire ou non.

En fait, lorsque la puissance maximale est atteinte, le fait de changer la nature de l'alimentation (tension/courant) ne fait pas brusquement changer le courant dans la résistance. Il n'y a pas de variation brutale de la puissance dissipée et donc pas de variation de température due à l'auto échauffement

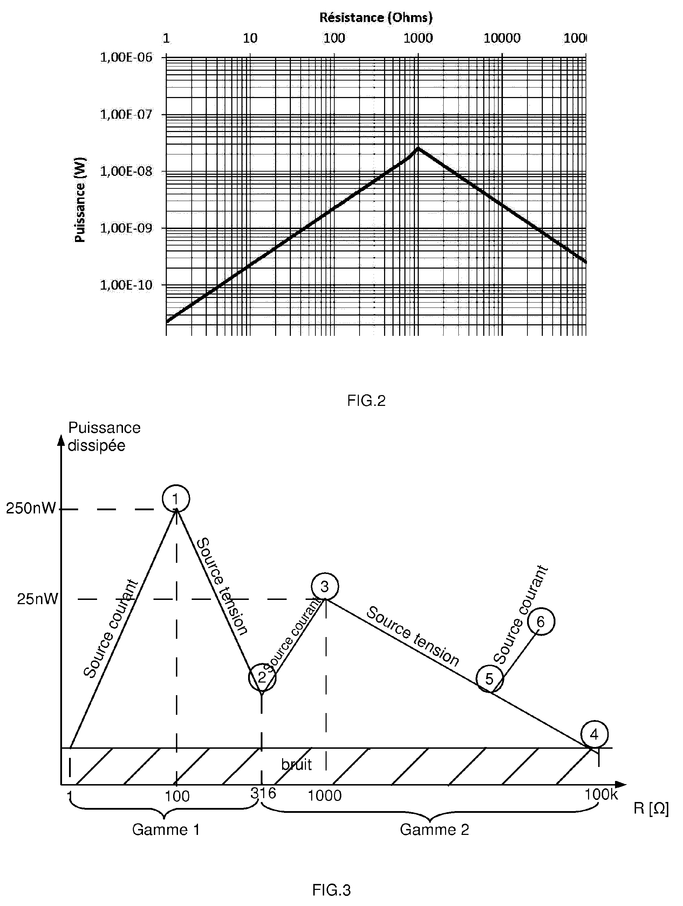

La figure 2 montre un exemple de l'évolution de la puissance dissipée dans un capteur de température résistif en fonction de la valeur de sa résistance électrique et permet d'illustrer l'avantage de ce passage du premier mode au deuxième mode ou inversement en fonction d'une valeur de puissance calculée à partir de ladite au moins une grandeur physique déterminée. En effet, à 1kΩ, la puissance dissipée atteint la limite recommandée par les constructeurs de capteur. On commute alors en source de tension si on était en source de courant, ou inversement.

En outre, pour un type de capteur de température résistif cette commutation de la source de courant vers la source de tension est d'autant plus pertinente. Ce type de capteur de température résistif peut être en un matériau de type CTN (à Coefficient de Température Négatif), ou plus généralement un capteur pour lequel la résistance augmente plus sa température diminue. En effet, en source de tension, plus la résistance augmente et plus la puissance dissipée diminue $\left( P = \dfrac{U^2}{R} \right)$. On constate donc que la puissance diminue en même temps que la température, l'effet de l'auto-échauffement du capteur va donc dans le bon sens pour améliorer la pertinence des mesures effectuées.

Préférentiellement, le procédé comprend une étape de comparaison de la grandeur physique déterminée (représentée E4-1 pour le premier mode où une tension est comparée, et E4-2 pour le deuxième mode où un courant est comparé) à un seuil prédéfini de grandeur physique. En fonction du résultat de l'étape de comparaison E4-1,E4-2, l'étape de commutation du premier mode au deuxième mode, ou inversement, est mise en oeuvre concomitamment avec une étape de modification E5 d'un élément résistif relié électriquement au capteur de température résistif pour ajuster la puissance dissipée par le capteur de température résistif lors de son alimentation. Cet élément résistif peut être une résistance de shunt ajustable reliée en série avec le capteur de température résistif. Le seuil prédéfini de la grandeur physique correspond généralement à un seuil au-dessous duquel une valeur mesurée au niveau du capteur de température résistif (un courant dans le deuxième mode, ou une tension dans le premier mode) en vue de déterminer ladite au moins une grandeur physique est inexploitable car par exemple noyée dans du bruit (un bruit blanc par exemple) ou en dessous de la résolution d'un convertisseur associé. La modification de l'élément résistif correspond à modifier la résistance de ce dernier pour adapter la résistance du circuit comprenant le capteur de température résistif. Il s'agit donc d'un changement de gamme. De manière générale, la résistance de l'élément résistif reste constante en dehors de ses phases de modifications.

Selon un exemple particulier qui sera détaillé plus tard, préférentiellement l'étape E4-1 est mise en oeuvre en sortie non de l'étape E3-1 (c'est-à-dire lorsque I$_{excitation}$*V$_{mes}$ est inférieure à la puissance maximum de référence P$_{dmax}$), et l'étape E4-2 est mise en oeuvre en sortie non de l'étape E3-2

(c'est-à-dire lorsque V$_{excitation}$*I$_{mes}$ est inférieure à la puissance maximum de référence P$_{dmax}$). Préférentiellement, dans l'étape E4-1 si la tension mesurée V$_{mes}$ au carré est inférieure à un seuil de tension Vseuil alors les étapes E2 et E5 sont mises en oeuvre, si non la mesure est considérée comme valide (on ne modifie ni la gamme, ni le mode), on peut alors déterminer la résistance puis la température. Préférentiellement, dans l'étape E4-2 si le courant mesuré I$_{mes}$ au carré est inférieur à un seuil de courant Iseuil alors les étapes E2 et E5 sont mises en oeuvre, si non la mesure est considérée comme valide (on ne modifie ni la gamme, ni le mode), on peut alors déterminer la résistance puis la température.

La figure 3 permet d'illustrer les différentes mises en oeuvre de l'étape de commutation E2. Cette figure 3 représente l'évolution de la puissance dissipée par le capteur de température résistif en fonction de la résistance effective du capteur de température résistif. Le capteur de température résistif utilisé dans l'exemple est apte à adopter une résistance effective, en fonction de la température à laquelle il est soumis, comprise entre 1 Ohm et 100kOhms. En outre, ce capteur comporte deux gammes de fonctionnement. Une première gamme (Gamme 1) est définie entre 1 Ohm et 316 Ohms et une deuxième gamme (Gamme 2) est définie entre 316 Ohms et 100kOhms. Le passage d'une gamme à l'autre correspond à la modification de l'élément résistif décrit ci-dessus. En particulier, sur cette figure 3, les points 1 et 3 sont définis comme étant la limite en puissance dissipée tolérée respectivement dans les deux gammes. Au point 1 la puissance Pmax est de 250nw (Gamme 1) et au point 3 la puissance Pmax est de 25nW (Gamme 2). Ils correspondent idéalement après amplification à la pleine échelle d'un convertisseur analogique numérique permettant de transformer un échantillon du signal analogique correspondant à une mesure effectuée sur un circuit comprenant le capteur de température résistif en un échantillon numérique. Le point 2 est un point de raccordement dont il faut veiller à ce que la valeur de la tension, ou du courant, lu à ce point ne soit pas assujettie à des erreurs de mesure (trop proche du palier de bruit par exemple). Si on note $R_{c1}$ la valeur de la résistance du capteur de température résistif au point 1 et $R_{c3}$ la valeur de la résistance du capteur de température résistif au point 3, on montre que $R_{c2}$ la résistance au point 2 vaut $R_{c2} = \sqrt{R_{c1} * R_{c3}}$. En outre, le point 2 étant disposé au niveau d'un changement de gamme, le passage de la source de tension (deuxième mode) à la source de courant (premier mode) du point 2 (ou inversement) s'accompagne aussi de la modification de la gamme. Le point 4 constitue dans cet exemple la valeur limite de la résistance capable d'être lue. Au-delà de ce point, le courant mesuré devient très faible et passe en dessous du bruit propre à la chaine de mesure, le signal utile est noyé dans le bruit. Si la valeur limite de la résistance n'est pas suffisante (par exemple on veut mesurer jusqu'à 200kΩ) il est nécessaire de mettre en place d'autres points 5 et 6, et ainsi de suite pour couvrir la gamme voulue avec la résolution nécessaire.

En mettant en oeuvre ce procédé de gestion sur un dispositif de mesure de température comprenant un capteur de mesure résistif piloté selon ledit procédé de gestion. On peut avantageusement déterminer, via ledit capteur de température résistif, des températures cryogéniques avec une bande passante supérieure au temps de réponse du capteur, par exemple de 100Hz, en contrôlant l'auto échauffement dudit capteur de température résistif de manière optimisée. Les capteurs de température résistifs communément utilisés peuvent varier de 1Ω à 100kΩ (par exemple un tel capteur de température résistif peut être de la marque Cernox).

Dans certains cas, il est possible que des capacités parasites puissent provoquer des incertitudes dans la détermination d'une résistance électrique du capteur de température résistif lorsque les longueurs de câbles destinés à véhiculer des informations de mesure (courant mesuré ou tension mesurée) sont grandes, notamment lorsque la résistance électrique du capteur de température résistif est grande et que les signaux d'excitation sont modulés en vue de satisfaire les besoins d'une grande bande passante.

Dans ce cas, il est intéressant de basculer de la source de courant (premier mode) vers la source de tension (deuxième mode) après l'étape E1 lorsque l'impact de la capacité parasite n'est plus jugé comme étant négligeable et dans la mesure où cette commutation ne met pas le dispositif en saturation (sortie oui de E6-1 ou E6-2 réalisées après l'étape E1). La capacité parasite peut être mesurée avant, par exemple au moment où le câblage est réalisé (par exemple, avant de bancher le capteur sur les câbles qui vont être reliés à l'instrument, on mesure la capacité parasite par exemple avec un capacimètre).

Par « signal d'excitation », on entend le signal injecté dans le capteur de température. Il peut être par exemple soit continu, soit sinusoïdal, ou carré, etc. dans le cas d'une modulation. Le signal d'excitation est dit en courant dans le premier mode, et en tension dans le deuxième mode.

Selon une mise en oeuvre particulière, le procédé de gestion comporte une étape d'injection de signaux d'excitation modulés (la modulation permet de pallier aux problématiques de bande passante) dans le capteur de température résistif et une étape d'échantillonnage de données issues d'un circuit incluant le capteur de température résistif. On comprend alors que cette étape d'échantillonnage utilise un démodulateur permettant de déterminer une grandeur physique correspondante pour chaque échantillon en sortie du démodulateur.

Typiquement, chaque échantillon peut correspondre à une mesure effectuée sur un circuit comprenant le capteur de température résistif (par exemple une mesure de courant ou de tension).

Dans le premier mode, chaque grandeur physique déterminée est une tension déduite, ou mesurée, aux bornes du capteur de température résistif, si pour T1 échantillons arrivés au démodulateur, la tension déduite, ou mesurée, au carré est en dessous d'une valeur seuil associée, alors l'étape de commutation du premier mode au deuxième mode est mise en oeuvre concomitamment avec un changement de gamme (c'est-à-dire avec une étape de modification d'un élément résistif relié électriquement au capteur de température résistif). Ici, la valeur seuil peut être une tension seuil $V_{seuil}$ avec $V_{seuil} = (R_{c2}*I_{excitation})^2$. On comprend que, ce passage correspond à une mise en oeuvre particulière de l'étape E4-1 évoquée ci-dessus, les conditions de mise en oeuvre de l'étape E4-2 peuvent alors s'appliquer.

Alternativement, dans le deuxième mode, chaque grandeur physique déterminée est le courant déduit, ou mesuré, traversant le capteur de température résistif, et si pour T1 échantillons le courant déduit, ou mesuré, au carré est inférieur à une valeur seuil associée alors l'étape de commutation du deuxième mode au premier mode est mise en oeuvre concomitamment avec un changement de gamme (c'est-à-dire avec une étape de modification d'un élément résistif relié électriquement au capteur de température résistif). Ici, la valeur seuil peut être une intensité seuil $I_{seuil}$ avec $I_{seuil} = ((1/R_{c2})*V_{excitation})^2$ On comprend que, ce passage correspond à une mise en oeuvre particulière de l'étape E4-2 évoquée ci-dessus, les conditions de mise en oeuvre de l'étape E4-2 peuvent alors s'appliquer.

Dans les deux modes, on préfère avant tout comparer les modules. On a alors pris le carré de la valeur pour des raisons simplifiant les ressources de calcul. En effet, la racine carrée aurait pu être utilisée mais cela aurait demandé plus de ressources de calcul.

$R_{c2}$ utilisé ci-dessus correspond à la valeur de la résistance pour laquelle le dispositif va changer de gamme. Préférentiellement, on la détermine en faisant la moyenne géométrique des valeurs de résistance qui provoque un changement de mode $\left(R_{c2} = \sqrt{R_{c1} * R_{c3}}\right)$.

Le changement de gamme est ici nécessaire car sans cela lors de la commutation on aurait soit une saturation du courant, soit une mesure de tension nulle (ici le capteur serait saturé). C'est donc pour cela que l'on met concomitamment en oeuvre un changement de gamme.

Dans le cas où, en amont du démodulateur, le procédé comprend, pour chaque échantillon, une étape de conversion par un convertisseur d'un échantillon analogique issu du circuit vers un échantillon numérique à présenter à une entrée du démodulateur, le nombre T1 d'échantillons est au moins supérieur à un nombre représentant un retard en transmission des échantillons dû au convertisseur, notamment au travail de conversion dudit convertisseur. Ceci est notamment mis en oeuvre lorsque le convertisseur est de type sigma-delta. Un convertisseur efficace et donnant une bonne résolution de type sigma-delta introduit classiquement un retard qu'il faut prendre en compte.

Par ailleurs, de manière applicable à tout ce qui a été dit ci-avant, le procédé peut comporter une étape de détection d'une saturation (déjà évoquée précédemment en relation avec les étapes E6-1 et E6-2) d'au moins une mesure, notamment de tension (dans le premier mode E6-1) ou de courant (dans le deuxième mode E6-2), réalisée sur un circuit comprenant le capteur de température résistif et destinée à déterminer ladite grandeur physique, l'alimentation du capteur de température résistif étant commutée du premier mode au deuxième, ou inversement, si ladite au moins une mesure est saturée, notamment pour un nombre donné d'échantillons de mesure (ceci permettant d'éviter de commuter en cas de mauvaise détection d'une unique saturation). En particulier, la saturation peut être détectée en analysant le signal mesuré, par exemple si le signal d'excitation du capteur de température résistif est un signal sinusoïdale et que les signaux lus au niveau de ce capteur sont de forme en créneau alors on considère qu'il y a une saturation. Ceci permet de pallier aux problématiques risquant d'engendrer des déterminations fausses de la résistance du capteur de température résistif. Les étapes E6-1 et E6-2 n'ont pas de sortie non dans le sens où si on ne détecte pas de saturation, on ne met pas en oeuvre la commutation. Dans un exemple particulier, même si on se trouve dans la situation de la sortie non des étapes E6-1 ou E6-2, si les conditions associées aux étapes E4-1 ou E4-2 sont satisfaites, il y aura quand même commutation. Avantageusement, après une mise en oeuvre de l'étape de commutation E2, toute nouvelle mise en oeuvre de l'étape de commutation E2 est inhibée en fonction d'un critère prédéterminé. Ce critère prédéterminé est tel qu'il permet d'éviter les commutations intempestives. Ce critère peut être une donnée temporelle. En particulier, ladite nouvelle mise en oeuvre de l'étape de commutation peut être inhibée pour T2 échantillons, T2 est supérieur à un nombre représentant le retard en transmission d'une chaîne de mesure, notamment la chaîne de mesure comporte le convertisseur et tout élément générant un retard comme par exemple le démodulateur cité ci-avant.

Après une commutation, le calcul de la résistance du capteur de température résistif peut être faux dans certains cas si des précautions ne sont pas prises. En effet, lorsqu'une commutation de gamme et/ou de mode (changement de source d'alimentation) a lieu, pendant $T_{ADC}$ (représentant le retard induit par le convertisseur décrit ci-dessus) les valeurs de tension ou de courant lues correspondent toujours à celles de la précédente gamme et/ou mode. Il faut alors garder les coefficients correspondants à la gamme/mode en cours et les changer seulement au bout de $T_1$ échantillons. Pour la démodulation, il faut prendre la même précaution.

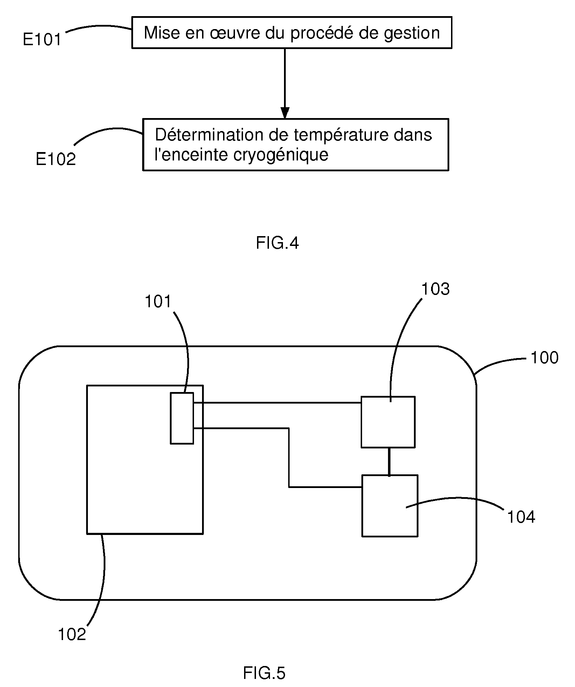

L'invention est aussi relative à un procédé de détermination (illustré à la figure 4) d'une température dans une enceinte cryogénique à partir d'un capteur de température résistif disposé dans ladite enceinte cryogénique. Un tel procédé comprend une étape E101 de mise en oeuvre du procédé de gestion de l'alimentation du capteur de température résistif tel que décrit, et une étape de détermination E102 de la température mettant en oeuvre une étape de détermination de la résistance électrique du capteur de température résistif à partir de données issues d'un circuit comprenant le capteur de température résistif, et une corrélation de la résistance électrique déterminée avec une valeur de température, notamment à partir d'une table de référence pré-établie par exemple fournie par le fabricant. Cette table de référence, bien connue de l'homme du métier ne sera pas ici décrite en détails.

De préférence, après la mise en oeuvre d'une étape de commutation (E2), des informations d'interprétation des données lues (tension ou courant selon le mode sélectionné) à partir du circuit comprenant ledit capteur de température résistif sont conservées au moins temporairement du fait d'un décalage entre l'instant de lecture desdites données au niveau du circuit et leur interprétation par un démodulateur. Alternativement, l'étape de détermination de la température E102 est inhibée tant que les données reçues par le démodulateur sont représentatives d'une lecture d'une donnée ayant eu lieu avant la commutation.

On comprend de ce qui a été dit ci-dessus que l'invention est aussi relative à un dispositif 100 tel qu'illustré à la figure 5 et comprenant : un capteur de température résistif 101 placé dans une enceinte cryogénique 102 ; une alimentation 103 configurée pour alimenter ledit capteur de température résistif sélectivement en courant dans le premier mode ou en tension dans le deuxième mode ; un système de gestion 104 de l'alimentation du dispositif comprenant un élément de détermination d'au moins une grandeur physique associée au fonctionnement du capteur de température résistif et un élément de commutation du premier au deuxième mode, ou inversement, en fonction de ladite au moins une grandeur physique déterminée. On comprend alors que le système de gestion peut comporter les moyens logiciels et matériels permettant de mettre en oeuvre le procédé de gestion.

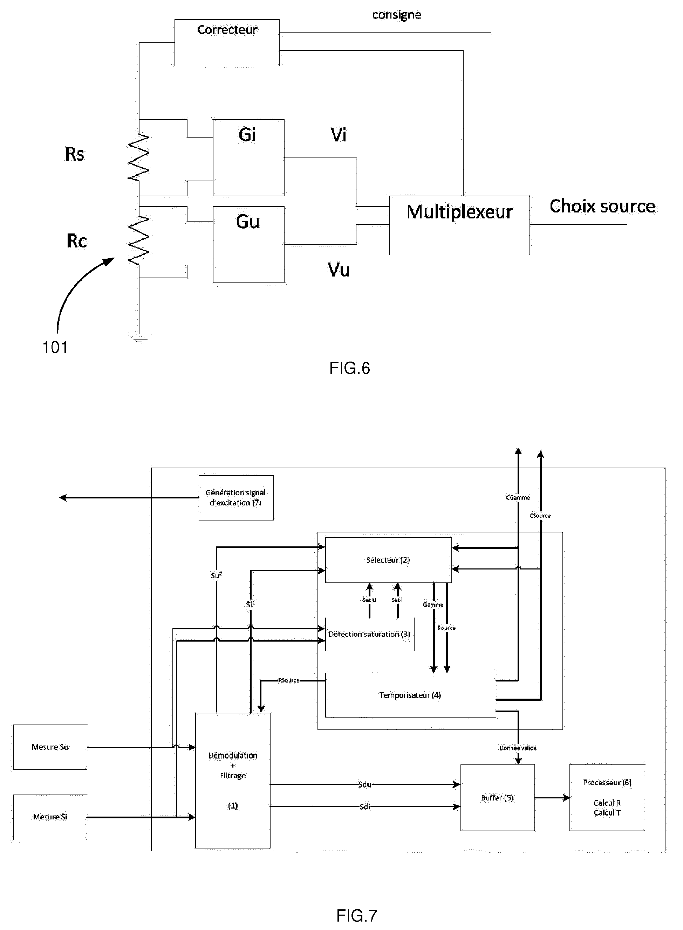

Selon une mise en oeuvre particulière permettant notamment le changement de gamme décrit ci-avant et illustrée à la figure 6, le dispositif comporte une résistance de shunt Rs reliée en série avec le capteur de température résistif 101 formant une résistance Rc. Un premier élément de mesure Gi permet de mesurer la tension aux bornes de la résistance de shunt et un deuxième élément de mesure Gu permet de mesurer la tension aux bornes du capteur de température résistif 101. En outre, un correcteur du dispositif est configuré de sorte à imposer une tension de consigne Vs aux bornes du capteur de température résistif dans le deuxième mode ou aux bornes de la résistance de shunt dans le premier mode. La résistance de shunt forme alors l'élément résistif décrit dans le cadre du procédé et permettant, si il est modifié, d'adapter la gamme.

On comprend alors que dans le premier mode il sera préférentiellement mesuré la tension aux bornes du capteur de température résistif, et que dans le deuxième mode il sera préférentiellement mesuré la tension aux bornes de la résistance de shunt Rs en vue de déterminer le courant traversant le capteur de température résistif. Autrement dit, en source de courant (premier mode), le correcteur asservit la tension aux bornes de $R_s$ à la consigne ($U_{Rs} = V_{cons}$) fixant ainsi le courant dans $R_c$. Une mesure de la tension aux bornes de $R_c$ ($Vu$) permet d'une part de déterminer la puissance effective dissipée en vue de la comparer à Pmax afin de vérifier s'il est nécessaire de commuter l'alimentation, et d'autre part de déduire la valeur Rc pour en déduire la température dans l'enceinte cryogénique. En source de tension (deuxième mode), le correcteur impose la tension aux bornes de Rc ($U_{Rc} = V_{cons}$), une mesure de la tension aux bornes de $R_s$ ($Vi$) permet de déduire le courant dans $R_c$ pour d'une part de déterminer la puissance effective dissipée en vue de la comparer à Pmax afin de vérifier s'il est nécessaire de commuter l'alimentation, et d'autre part de déduire la valeur Rc pour en déduire la température dans l'enceinte cryogénique. Un tel dispositif permet de couvrir une plage de température comprise en 1 K et 100K (pour des Cernox par exemple). Pour mesurer des températures supérieures à 100K, on procède de la même manière tout en rajoutant une gamme de mesure (point 2 sur la figure 3). Cela revient à diminuer la valeur de la résistance de shunt Rs. En commutant la source en tension, à mesure que la résistance diminue le courant mesuré augmente. Lorsqu'il est tel que la puissance dissipée devient significative (on se trouve à température plus haute) (cf point 1 sur la figure 3), on commute en courant afin de diminuer la puissance lorsque la résistance électrique diminue.

Il a été décrit ci-avant un dispositif muni d'un capteur résistif. Bien entendu le dispositif peut comporter une pluralité de capteurs de température résistifs associés à un même milieu cryogénique ou à des milieux cryogéniques différents. Ainsi, il est possible de prévoir un dispositif avec un grand nombre de voies (chaque voie correspondant à un capteur de température résistif) avec fréquence d'acquisition à 2kHz, ceci nécessitant néanmoins une puissance de calcul non négligeable. Une solution consiste alors à utiliser de la logique programmable pour réaliser les opérations les plus couteuses en calcul. La figure 7 donne un schéma de principe pour une voie apte à fonctionner avec ledit grand nombre de voies. Sur cette figure, le bloc (7) fournit le signal d'excitation du capteur de température résistif. Les données ($S_u$ et Si) sont échantillonnées à la fréquence de 2kHz, elles sont démodulées et filtrées. Selon la source (courant dans le premier mode ou tension dans le deuxième mode), le bloc (1) détermine $S_{du}$ et $S_{di}$ (valeurs démodulées) pour calculer la résistance et la température dans un processeur (bloc (6)). Les données échantillonnées ($S_u$ et $S_i$) à 2kHz sont injectées dans le bloc (3) afin de détecter une saturation qui nécessiterait alors un changement de source d'alimentation (tension ou courant) comme évoqué précédemment dans la description relative au procédé. Les données $S_u^2$ et $S_i^2$ déterminées dans le bloc (1) sont injectées dans le bloc (2) qui détermine à chaque échantillon le meilleur couple gamme/source. Le bloc (4) reçoit un couple gamme/source proposé par le bloc (2). Lorsque la temporisation $T_1$ est respectée, le couple gamme/source est validé et la commutation a lieu au niveau analogique (Csource/Cgamme) toute nouvelle commutation est interdite pendant T2 échantillons (temps nécessaire pour que le dispositif « voit » l'effet de la commutation). Le bloc (1) n'est informé de cette commutation qu'au bout de $T_2$ échantillons (Rsource est l'image de Csource retardé de $T_2$ échantillons). En parallèle, les données sont invalidées dans le buffer (bloc 5) afin de bloquer le calcul des résistances et donc des températures au niveau du processeur pendant $T_2$ échantillons.

Autrement dit, on comprend que la centrale d'acquisition peut permettre la mesure de plusieurs voies en simultané. Des convertisseurs échantillonnent courant et tension des capteurs de température résistifs situés dans l'enceinte cryogénique. Les données sont sérialisées et envoyées à une partie numérique afin d'être traitées et d'extraire les températures. La partie numérique s'occupe aussi de modifier les sources d'alimentation des capteurs afin de contrôler les niveaux d'excitation, de générer un signal de modulation pour pallier aux problèmes de bruit (notamment le 50Hz du secteur fortement présent dans un milieu industriel) et d'adapter la gamme de mesure afin de garantir un signal en pleine échelle sur la plage de température 4k-300K.

Dans la présente description, la détermination/mesure de la grandeur physique peut être une mesure en tension réalisée à l'aide d'un voltmètre ou d'un convertisseur CAN - Convertisseur Analogique Numérique - (ou A/D pour l'anglais Analog to Digital). La commutation peut être réalisée par un interrupteur piloté. La chaîne de mesure peut comprendre un étage d'amplification, par exemple différentiel, suivi d'un convertisseur.

Ce paragraphe ne cite que des exemples particuliers de mise en oeuvre sans être limitatif.

**Revendications**

1. Procédé de gestion d'une alimentation d'un capteur de température résistif (101) placé dans une enceinte cryogénique (102) et alimenté sélectivement en courant dans un premier mode ou en tension dans un deuxième mode, ledit procédé comprenant une étape de détermination (E1) d'au moins une grandeur physique associée au fonctionnement du capteur de température résistif, et une étape de commutation (E2) du premier mode au deuxième mode, ou inversement, en fonction de ladite au moins une grandeur physique déterminée.

2. Procédé selon la revendication précédente, **caractérisé en ce qu'**il comporte une étape de détection (E6) d'une saturation d'au moins une mesure, notamment de tension ou de courant, réalisée sur un circuit comprenant le capteur de température résistif et destinée à déterminer ladite grandeur physique, l'alimentation du capteur de température résistif étant commutée du premier mode au deuxième, ou inversement, si ladite au moins une mesure est saturée, notamment pour un nombre donné d'échantillons de mesure.

3. Procédé selon l'une des revendications précédentes, **caractérisé en ce que**, dans le premier mode, le capteur de température résistif est alimenté en courant à une valeur $I_{excitation}$, et l'étape de détermination (E1) de ladite au moins une grandeur physique comprend une détermination (E-1-1-1) d'une tension $V_{mes}$ aux bornes dudit capteur de température résistif, et **en ce que** ladite étape de commutation (E2) est mise en oeuvre si $I_{excitation}*V_{mes}$ devient supérieure ou égale (E3-1) à une puissance maximum de référence $P_{dmax}$.

4. Procédé selon l'une des revendications 1 à 3, **caractérisé en ce que**, dans le deuxième mode, le capteur de température résistif est alimenté en tension à une valeur $V_{excitation}$, l'étape de détermination (E1) de ladite au moins une grandeur physique comprenant la détermination (E1-1-2) d'un courant $I_{mes}$ traversant ledit capteur de température résistif, et **en ce que** ladite étape de commutation (E2) est mise en oeuvre si $V_{excitation}*I_{mes}$ devient supérieure ou égale (E3-2) à une puissance maximum de référence $P_{dmax}$.

5. Procédé selon l'une quelconque des revendications précédentes, **caractérisé en ce qu'**il comporte une étape de comparaison (E4-1, E4-2) de la grandeur physique déterminée à un seuil prédéfini de grandeur physique, et **en ce qu'**en fonction du résultat de l'étape de comparaison (E4-1, E4-2), l'étape de commutation (E2) du premier mode au deuxième mode, ou inversement, est mise en oeuvre concomitamment avec une étape de modification (E5) d'un élément résistif relié électriquement au capteur de température résistif pour ajuster la puissance dissipée par ledit capteur de température résistif lors de son alimentation.

6. Procédé selon l'une quelconque des revendications précédentes, **caractérisé en ce qu'**il comprend une étape d'injection de signaux d'excitation modulés dans le capteur de température résistif, et **en ce qu'**il comprend une étape d'échantillonnage de données issues d'un circuit incluant le capteur de température résistif et utilisant un démodulateur permettant de déterminer une grandeur physique correspondante pour chaque échantillon en sortie du démodulateur.

7. Procédé selon la revendication précédente, **caractérisé en ce que** dans le premier mode chaque grandeur physique déterminée est une tension déduite, ou mesurée, aux bornes du capteur de température résistif, et **en ce que**, si pour T1 échantillons arrivés au démodulateur, la tension déduite, ou mesurée, au carré est en dessous d'une valeur seuil associée, alors l'étape de commutation du premier mode au deuxième mode est mise en oeuvre concomitamment avec une étape de modification d'un élément résistif relié électriquement au capteur de température résistif.

8. Procédé selon la revendication 6, **caractérisé en ce que** dans le deuxième mode chaque grandeur physique déterminée est le courant déduit, ou mesuré, traversant le capteur de température résistif, et **en ce que** si pour T1 échantillons arrivés au démodulateur, le courant déduit, ou mesuré, au carré est inférieur à une valeur seuil associée alors l'étape de commutation du deuxième mode au premier mode est mise en oeuvre concomitamment avec une étape de modification d'un élément résistif relié électriquement au capteur de température résistif.

9. Procédé selon l'une des revendications 7 ou 8, **caractérisé en ce qu'**il comporte, pour chaque échantillon, une étape de conversion par un convertisseur d'un échantillon analogique issu du circuit vers un échantillon numérique à présenter à une entrée du démodulateur, le nombre T1 d'échantillons est au moins supérieur à un nombre représentant un retard en transmission des échantillons dû au convertisseur.

10. Procédé selon l'une quelconque des revendications précédentes, **caractérisé en ce qu'**après une mise en oeuvre de l'étape de commutation (E2), toute nouvelle mise en oeuvre de l'étape de commutation (E2) est inhibée en fonction d'un critère prédéterminé.

11. Procédé selon la revendication 9 et la revendication 10, **caractérisé en ce que** ladite nouvelle mise en oeuvre de l'étape de commutation (E2) est inhibée pour T2 échantillons, T2 étant supérieur à un nombre représentant le retard en transmission d'une chaîne de mesure comprenant le convertisseur et tout élément générant un retard.

12. Procédé de détermination d'une température dans une enceinte cryogénique à partir d'un capteur de température résistif disposé dans ladite enceinte cryogénique, **caractérisé en ce qu'**il comprend une étape de mise en oeuvre (E101) du procédé de gestion de l'alimentation du capteur de température résistif selon l'une quelconque des revendications précédentes, et **en ce qu'**il comporte une étape de détermination (E102) de la température mettant en oeuvre une étape de détermination de la résistance électrique du capteur de température résistif et une corrélation de la résistance électrique déterminée avec une valeur de température, notamment à partir d'une table de référence pré-établie.

13. Procédé selon la revendication précédente, **caractérisé en ce qu'**après la mise en oeuvre d'une étape de commutation (E2), des informations d'interprétation des données lues à partir d'un circuit comprenant ledit capteur de température résistif sont conservées au moins temporairement du fait d'un décalage entre l'instant de lecture desdites données au niveau du circuit et leur interprétation par un démodulateur, ou **en ce que** l'étape de détermination de la température est inhibée tant que les données reçues par le démodulateur sont représentatives d'une lecture d'une donnée ayant eu lieu avant la commutation.

14. Dispositif comprenant :

- un capteur de température résistif (101) placé dans une enceinte cryogénique (102),
- une alimentation (103) configurée pour alimenter ledit capteur de température résistif (101) sélectivement en courant dans un premier mode ou en tension dans un deuxième mode, **caractérisé en ce qu'**il comprend:

- un système de gestion de l'alimentation (104) du dispositif comprenant un élément de détermination d'au moins une grandeur physique associée au fonctionnement du capteur de température résistif (101) et un élément de commutation du premier au deuxième mode, ou inversement, en fonction de ladite au moins une grandeur physique déterminée.

15. Dispositif selon la revendication précédente, **caractérisé en ce qu'**il comporte une résistance de shunt (Rs) reliée en série avec le capteur de température (101), un premier élément de mesure (Gi) permettant de mesurer la tension aux bornes de la résistance de shunt (Rs), un deuxième élément de mesure (Gu) permettant de mesurer la tension aux bornes du capteur de température résistif (101), un correcteur configuré de sorte à imposer une tension de consigne aux bornes du capteur de température résistif (101) dans le deuxième mode, ou aux bornes de la résistance de shunt (Rs) dans le premier mode.

**Patentansprüche**

1. Verfahren zur Steuerung einer Versorgung eines resistiven Temperatursensors (101), der in einem Tieftemperaturgehäuse (102) platziert ist und selektiv in einem ersten Modus mit Strom oder in einem zweiten Modus mit Spannung versorgt wird, wobei das Verfahren einen Schritt der Bestimmung (E1) mindestens einer physikalischen Größe, die mit der Funktion des resistiven Temperatursensors assoziiert ist, und einen Schritt des Umschaltens (E2) vom ersten Modus in den zweiten Modus oder umgekehrt in Abhängigkeit von der mindestens einen bestimmten physikalischen Größe umfasst.

2. Verfahren nach dem vorhergehenden Anspruch, **dadurch gekennzeichnet, dass** es einen Schritt des Nachweisens (E6) einer Sättigung mindestens einer Messung, insbesondere der Spannung oder des Stroms umfasst, die an einer Schaltung ausgeführt wird, die den resistiven Temperatursensor umfasst und dazu bestimmt ist, die physikalische Größe zu bestimmen, wobei die Versorgung des resistiven Temperatursensors vom ersten in den zweiten Modus oder umgekehrt umgeschaltet wird, wenn die mindestens eine Messung gesättigt ist, insbesondere für eine gegebene Anzahl von Messproben.

3. Verfahren nach einem der vorhergehenden Ansprüche, **dadurch gekennzeichnet, dass** der resistive Temperatursensor in dem ersten Modus mit Strom bei einem Wert $I_{excitation}$ versorgt wird und der Schritt der Bestimmung (E1) der mindestens einen physikalischen Größe eine Bestimmung (E-1-1-1) einer Spannung $V_{mes}$ an den Klemmen des resistiven Temperatursensors umfasst, und dadurch, dass der Schritt des Umschaltens (E2) durchgeführt wird, wenn bei einer maximalen Referenzleistung $P_{dmax}$ $I_{excitation}*V_{mes}$ größer oder gleich (E3-1) wird.

4. Verfahren nach einem der Ansprüche 1 bis 3, **da-**

**durch gekennzeichnet, dass** der resistive Temperatursensor in dem zweiten Modus bei einem Wert $V_{excitation}$ mit Spannung versorgt wird, wobei der Schritt der Bestimmung (E1) der mindestens einen physikalischen Größe die Bestimmung (E1-1-2) eines Stroms $I_{mes}$ umfasst, der durch den resistiven Temperatursensor geht, und dadurch, dass der Schritt des Umschaltens (E2) durchgeführt wird, wenn bei einer maximalen Referenzleistung $P_{dmax}$ $V_{excitation}*I_{mes}$ größer oder gleich (E3-2) wird.

5. Verfahren nach einem der vorhergehenden Ansprüche, **dadurch gekennzeichnet, dass** es einen Schritt des Vergleichs (E4-1, E4-2) der physikalischen Größe, bestimmt an einem vordefinierten Schwellenwert der physikalischen Größe, umfasst, und dadurch, dass in Abhängigkeit vom Ergebnis des Vergleichsschritts (E4-1, E4-2), der Schritt des Umschaltens (E2) vom ersten Modus in den zweiten Modus oder umgekehrt gleichzeitig mit einem Schritt der Modifikation (E5) eines resistiven Elements durchgeführt wird, das elektrisch mit dem resistiven Temperatursensor verbunden ist, um die von dem resistiven Temperatursensor während seiner Versorgung auftretende Verlustleistung anzupassen.

6. Verfahren nach einem der vorhergehenden Ansprüche, **dadurch gekennzeichnet, dass** es einen Schritt der Einspeisung von modulierten Ansteuersignalen in den resistiven Temperatursensor umfasst, und dadurch, dass es einen Schritt der Probennahme von Daten umfasst, die aus einem Schaltkreis stammen, der den resistiven Temperatursensor enthält und unter Verwendung eines Demodulators, der es ermöglicht, eine entsprechende physikalische Größe für jede Probe am Ausgang des Demodulators zu bestimmen.

7. Verfahren nach dem vorhergehenden Anspruch, **dadurch gekennzeichnet, dass** in dem ersten Modus jede bestimmte physikalische Größe eine Spannung ist, die abgeleitet ist oder an den Klemmen des resistiven Temperatursensors gemessen wird, und dadurch, dass, wenn für T1 am Demodulator ankommende Proben, die abgeleitete oder gemessene Spannung im Quadrat unterhalb eines assoziierten Schwellenwerts liegt, dann der Schritt des Umschaltens vom ersten Modus in den zweiten Modus gleichzeitig mit einem Schritt der Modifikation eines resistiven Elements durchgeführt wird, das elektrisch mit dem resistiven Temperatursensor verbunden ist.

8. Verfahren nach Anspruch 6, **dadurch gekennzeichnet, dass** in dem zweiten Modus jede bestimmte physikalische Größe der abgeleitete oder gemessene Strom ist, der durch den resistiven Temperatursensor geht, und dadurch, dass, wenn für T1 am Demodulator ankommende Proben der abgeleitete oder gemessene Strom im Quadrat kleiner ist als ein assoziierter Schwellenwert, dann der Schritt des Umschaltens vom zweiten Modus in den ersten Modus gleichzeitig mit einem Schritt der Modifikation eines resistiven Elements durchgeführt wird, das elektrisch mit dem resistiven Temperatursensor verbunden ist.

9. Verfahren nach einem der Ansprüche 7 oder 8, **dadurch gekennzeichnet, dass** es für jede Probe einen Schritt der Umwandlung, durch einen Wandler, einer analogen Probe, die aus dem Schaltkreis stammt, in eine digitale Probe umfasst, die an einem Eingang des Demodulators zu präsentieren ist, wobei die Anzahl T1 von Proben mindestens größer ist als eine Anzahl, die für eine Übertragungsverzögerung der Proben steht, die auf den Wandler zurückzuführen ist.

10. Verfahren nach einem der vorhergehenden Ansprüche, **dadurch gekennzeichnet, dass** nach einer Durchführung des Schritts des Umschaltens (E2) jede neue Durchführung des Schritts des Umschaltens (E2) in Abhängigkeit von einem vorbestimmten Kriterium gehemmt wird.

11. Verfahren nach Anspruch 9 und Anspruch 10, **dadurch gekennzeichnet, dass** die neue Durchführung des Schritts des Umschaltens (E2) für T2 Proben gehemmt wird, wobei T2 größer ist als eine Anzahl, die für die Übertragungsverzögerung einer Messkette steht, die den Wandler und jedes Element, das eine Verzögerung erzeugt, umfasst.

12. Verfahren zur Bestimmung einer Temperatur in einem Tieftemperaturgehäuse mit einem resistiven Temperatursensor, der in dem Tieftemperaturgehäuse angeordnet ist, **dadurch gekennzeichnet, dass** es einen Schritt der Durchführung (E101) des Verfahrens zur Steuerung der Versorgung des resistiven Temperatursensors nach einem der vorhergehenden Ansprüche umfasst, und dadurch, dass es einen Schritt der Bestimmung (E102) der Temperatur umfasst, bei dem ein Schritt der Bestimmung des elektrischen Widerstands des resistiven Temperatursensors und eine Korrelation des bestimmten elektrischen Widerstands mit einem Temperaturwert, insbesondere aus einer vorher erstellten Referenztabelle, durchgeführt wird.

13. Verfahren nach dem vorhergehenden Anspruch, **dadurch gekennzeichnet, dass** nach der Durchführung eines Schritts des Umschaltens (E2) Informationen zur Interpretation der aus einer Schaltung, die den resistiven Temperatursensor umfasst, abgelesenen Daten aufgrund einer Verzögerung zwischen dem Moment des Ablesens der Daten im Schaltkreis und ihrer Interpretation durch einen Demodulator mindestens temporär gespeichert werden, oder dadurch, dass der Schritt der Bestimmung der Temperatur gehemmt wird, solange die Daten, die von dem Demodulator empfangen werden, für eine Ablesung eines Datums, die vor der Umschaltung stattfand, repräsentativ sind.

14. Vorrichtung, umfassend:

   - einen resistiven Temperatursensor (101), der in einem Tieftemperaturgehäuse (102) platziert ist,
   - eine Versorgung (103), die konfiguriert ist, um den resistiven Temperatursensor (101) selektiv in einem ersten Modus mit Strom oder in einem zweiten Modus mit Spannung zu versorgen, **dadurch gekennzeichnet, dass** sie Folgendes umfasst:

      - ein System zur Steuerung der Versorgung (104) der Vorrichtung, die ein Element zur Bestimmung mindestens einer physikalischen Größe, die mit der Funktion des resistiven Temperatursensors (101) assoziiert ist, und ein Element zum Umschalten vom ersten in den zweiten Modus oder umgekehrt in Abhängigkeit von der mindestens einen bestimmten physikalischen Größe umfasst.

15. Vorrichtung nach dem vorhergehenden Anspruch, **dadurch gekennzeichnet, dass** sie einen Shunt-Widerstand (Rs) umfasst, der mit dem Temperatursensor (101) in Reihe geschaltet ist, ein erstes Messelement (Gi), das es ermöglicht, die Spannung an den Klemmen des Shunt-Widerstands (Rs) zu messen, ein zweites Messelement (Gu), das es ermöglicht, die Spannung an den Klemmen des resistiven Temperatursensors (101) zu messen, einen Regler, der derart konfiguriert ist, dass er an die Klemmen des resistiven Temperatursensors (101) in dem zweiten Modus oder an die Klemmen des Shunt-Widerstands (Rs) in dem ersten Modus eine Sollspannung anlegt.

## Claims

1. Method for managing a supply of power to a resistive temperature sensor (101) placed in a cryogenic enclosure (102) and selectively supplied with current in a first mode or with voltage in a second mode, said method comprising a step of determining (E1) at least one physical quantity associated with the operation of the resistive temperature sensor, and a step of switching (E2) from the first mode to the second mode, or vice versa, depending on said at least one determined physical quantity.

2. Method according to the preceding claim, **characterized in that** it comprises a step of detecting (E6) a saturation of at least one measurement, in particular of voltage or of current, which step is carried out on a circuit comprising the resistive temperature sensor and is intended to determine said physical quantity, the supply of power to the resistive temperature sensor being switched from the first mode to the second, or vice versa, if said at least one measurement is saturated, in particular for a given number of measurement samples.

3. Method according to one of the preceding claims, **characterized in that**, in the first mode, the resistive temperature sensor is supplied with a current $I_{excitation}$, and the step of determining (E1) said at least one physical quantity comprises determining (E-1-1-1) a voltage $V_{mes}$ across the terminals of said resistive temperature sensor, and **in that** said switching step (E2) is implemented if $I_{excitation}*V_{mes}$ becomes greater than or equal to (E3-1) a reference maximum power $P_{dmax}$.

4. Method according to one of Claims 1 to 3, **characterized in that**, in the second mode, the resistive temperature sensor is supplied with a voltage $V_{excitation}$, the step of determining (E1) said at least one physical quantity comprising determining (E-1-1-2) a current $I_{mes}$ flowing through said resistive temperature sensor, and **in that** said switching step (E2) is implemented if $V_{excitation}*I_{mes}$ becomes greater than or equal to (E3-2) a reference maximum power $P_{dmax}$.

5. Method according to any one of the preceding claims, **characterized in that** it comprises a step of comparing (E4-1, E4-2) the determined physical quantity with a predefined physical quantity threshold, and **in that**, depending on the result of the comparing step (E4-1, E4-2), the step of switching (E2) from the first mode to the second mode, or vice versa, is implemented concomitantly with a step of modifying (E5) a resistive element that is electrically connected to the resistive temperature sensor in order to adjust the power dissipated by said resistive temperature sensor while it is being supplied with power.

6. Method according to any one of the preceding claims, **characterized in that** it comprises a step of injecting modulated excitation signals into the resistive temperature sensor, and **in that** it comprises a step of sampling data generated by a circuit including the resistive temperature sensor and using a demodulator allowing a corresponding physical quantity to be determined for each sample at the output of the demodulator.

7. Method according to the preceding claim, **charac-

**terized in that**, in the first mode, each determined physical quantity is a deduced, or measured, voltage across the terminals of the resistive temperature sensor, and **in that** if, for T1 samples received by the demodulator, the square of the deduced, or measured, voltage is below an associated threshold value, then the step of switching from the first mode to the second mode is implemented concomitantly with a step of modifying a resistive element that is electrically connected to the resistive temperature sensor.

8. Method according to Claim 6, **characterized in that** in the second mode each determined physical quantity is the deduced, or measured, current flowing through the resistive temperature sensor, and **in that** if, for T1 samples received by the demodulator, the square of the deduced, or measured, current is below an associated threshold value, then the step of switching from the second mode to the first mode is implemented concomitantly with a step of modifying a resistive element that is electrically connected to the resistive temperature sensor.

9. Method according to one of Claims 7 or 8, **characterized in that** it comprises, for each sample, a step of converting, with a converter, an analogue sample generated by the circuit to a digital sample to be supplied to an input of the demodulator, the number T1 of samples being at least greater than a number representing a sample transmission delay due to the converter.

10. Method according to any one of the preceding claims, **characterized in that** after an implementation of the switching step (E2), any new implementation of the switching step (E2) is inhibited depending on a predetermined criterion.

11. Method according to Claim 9 and Claim 10, **characterized in that** said new implementation of the switching step (E2) is inhibited for T2 samples, T2 being greater than a number representing the transmission delay of a measurement chain comprising the converter and any element generating a delay.

12. Method for determining a temperature in a cryogenic enclosure using a resistive temperature sensor positioned in said cryogenic enclosure, **characterized in that** it comprises a step of implementing (E101) the method for managing the supply of power to the resistive temperature sensor according to any one of the preceding claims, and **in that** it comprises a step of determining (E102) the temperature implementing a step of determining the electrical resistance of the resistive temperature sensor and a correlation of the determined electrical resistance with a temperature value, in particular using a preestablished reference table.

13. Method according to the preceding claim, **characterized in that** after the implementation of a switching step (E2), data interpretation information read from a circuit comprising said resistive temperature sensor is at least temporarily retained due to an offset between the instant at which said data are read at the level of the circuit and their interpretation by a demodulator, or **in that** the step of determining the temperature is inhibited as long as the data received by the demodulator are representative of a data reading operation having taken place before the switching operation.

14. Device comprising:

   - a resistive temperature sensor (101) placed in a cryogenic enclosure (102);
   - a power supply (103) configured to selectively supply said resistive temperature sensor (101) with current in a first mode or with voltage in a second mode, **characterized in that** it comprises:

      - a system for managing the supply of power (104) to the device comprising an element for determining at least one physical quantity associated with the operation of the resistive temperature sensor (101) and an element for switching from the first to the second mode, or vice versa, depending on said at least one determined physical quantity.

15. Device according to the preceding claim, **characterized in that** it comprises a shunt resistor (Rs) connected in series with the temperature sensor (101), a first measurement element (Gi) allowing the voltage across the terminals of the shunt resistor (Rs) to be measured, a second measurement element (Gu) allowing the voltage across the terminals of the resistive temperature sensor (101) to be measured, and a corrector configured so as to apply a setpoint voltage across the terminals of the resistive temperature sensor (101) in the second mode, or across the terminals of the shunt resistor (Rs) in the first mode.

FIG.1

FIG.2

FIG.3

E101 ──╮   ┌─────────────────────────────────────────┐
        │   │   Mise en œuvre du procédé de gestion   │
        │   └─────────────────────────────────────────┘

E102 ──╮   ┌─────────────────────────────────────────┐
        │   │   Détermination de température dans      │
        │   │   l'enceinte cryogénique                 │
        │   └─────────────────────────────────────────┘

FIG.4

FIG.5

Correcteur

consigne

Rs

Gi

Vi

Rc

Gu

Multiplexeur

Choix source

Vu

101

FIG.6

Génération signal
d'excitation (7)

CGamme

CSource

Sélecteur (2)

Su²

Si²

Sat U    Sat I    Gamme

Détection saturation (3)

Source

RSource

Temporisateur (4)

Mesure Su

Démodulation
+
Filtrage
(1)

Donnée valide

Sdu

Buffer (5)

Processeur (6)

Calcul R
Calcul T

Mesure Si

Sdi

FIG.7

# EP 2 889 595 B1

**RÉFÉRENCES CITÉES DANS LA DESCRIPTION**

**Documents brevets cités dans la description**

*   EP 0168518 A1